(19) Europäisches Patentamt

European Patent Office

Office européen des brevets

(11) **EP 1 655 955 A2**

(12) **EUROPEAN PATENT APPLICATION**

(43) Date of publication:
**10.05.2006 Bulletin 2006/19**

(51) Int Cl.:
*H04N 5/00* *(2006.01)*

(21) Application number: **05110019.6**

(22) Date of filing: **26.10.2005**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **05.11.2004 US 982551**

(71) Applicant: **MICROSOFT CORPORATION**
Redmond, Washington 98052-6399 (US)

(72) Inventors:
  • **Chapman, Ann E.**
    Redmond, WA 98052 (US)
  • **McEnroe, Elizabeth Rose**
    Redmond, WA 98052 (US)
  • **Carle, Kevin T.**
    Redmond, WA 98052 (US)
  • **Guo, Qing T.**
    Redmond, WA 98052 (US)
  • **Scott III, Samuel Thomas**
    Redmond, WA 98052 (US)

(74) Representative: **Grünecker, Kinkeldey,
Stockmair & Schwanhäusser
Anwaltssozietät
Maximilianstrasse 58
80538 München (DE)**

(54) **Method and device for content locking control**

(57)   Content re-lock control is described. In an embodiment, restricted content is unlocked such that the restricted content can be rendered for a rendering duration. A user-selectable input is received that time-shifts the rendering duration of the restricted content, and an effective rendering duration of the restricted content can be determined from the rendering duration and a time-shift duration that corresponds to the time-shift.

*Fig. 1*

**Description**

## TECHNICAL FIELD

This invention relates to rendering restricted content that has been un-locked, and controlling when to re-lock the restricted content.

## BACKGROUND

A digital video recorder in a television-based system allows a user to record media content, such as programs, movies, music, games, and other audio, video, and/or image content. A digital video recorder includes a hard disk memory so that the user can record media content of interest to the user, and then playback the recorded content when it is convenient for the user. A digital video recorder also provides a user with the option to navigate the recorded content with content navigation features commonly referred to as "trick modes". These content navigation features are typically initiated with a remote control device and include command inputs such as fast-forward, skip-ahead, rewind, skip-back, pause, stop, and the like, to navigate the recorded content.

Viewing restrictions, such as parental controls, can be applied to broadcast content by setting locks based on a broadcast duration of the content. However, setting viewing restrictions or locks based on a broadcast duration of the content is not an effective deterrent to restrict access to restricted content that has been recorded, or is being recorded, with a digital video recorder. The content navigation features facilitate time-shifting the duration metric over which the content is unlocked for viewing. An unauthorized viewer that does not have a personal identification number (PIN) to unlock restricted content, such as an R-rated movie, can simply avoid a content lock by pausing the movie beyond its expected viewing duration when the restricted content is locked, and then resume viewing the movie when the content restriction is no longer enabled.

Accordingly, there is a need to determine when to re-lock restricted content that has been recorded and that can be manipulated with content navigation commands.

## SUMMARY

Content re-lock control is described herein.

In an implementation of content re-lock control, restricted content is unlocked such that the restricted content can be rendered for a rendering duration. A user-selectable input is received that time-shifts the rendering duration of the restricted content, and an effective rendering duration of the restricted content can be determined from the rendering duration and a time-shift duration that corresponds to the time-shift.

## BRIEF DESCRIPTION OF THE DRAWINGS

The same numbers are used throughout the drawings to reference like features and components.

Fig. 1 illustrates various components of an exemplary content re-lock control system.

Fig. 2 illustrates an example of rendering restricted content and various examples of time-shifts when rendering the restricted content.

Fig. 3 is a flow diagram that illustrates an exemplary method for content re-lock control and is described with reference to the exemplary content re-lock control system shown in Fig. 1.

Fig. 4 is a flow diagram that illustrates an exemplary method for content re-lock control and is described with reference to the exemplary content re-lock control system shown in Fig. 1.

Fig. 5 illustrates various components of an exemplary computing device that can be implemented in the exemplary content re-lock control system shown in Fig. 1.

## DETAILED DESCRIPTION

Content re-lock control is described to determine when to re-lock restricted content that has been unlocked for a rendering duration, and that has been time-shifted while the restricted content is being rendered. Restricted content, such as an R-rated movie, a TV-MA (mature audience) television program, or a music CD that contains a warning "Parental Advisory: Explicit Lyrics", can have restrictions for limited access, such as a parental control code. When the restricted content is unlocked and rendered on a display and/or audio device, user-selectable inputs can time-shift the rendering duration of the restricted content. For example, a user can advance, replay, or suspend rendering the content.

Content re-lock control determines an effective rendering duration of the restricted content that can be determined from the initial rendering duration of the content and a time-shift duration that corresponds to time-shift input(s) that alter the rendering duration of the restricted content. The effective rendering duration is determined such that the restricted content can be re-locked after the content, or portions thereof, has been rendered to enforce content rendering restrictions, such as parental control settings.

While aspects of the described systems and methods for content re-lock control can be implemented in any number of different computing systems, environments, and/or configurations, embodiments of content re-lock control are described in the context of the following exemplary system architecture.

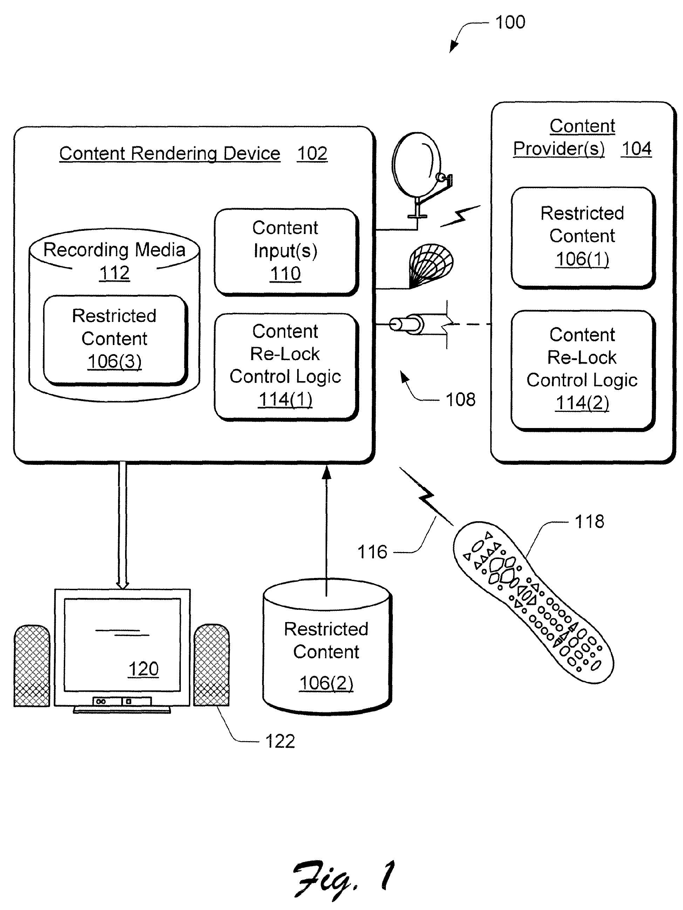

Fig. 1 illustrates various components of an exemplary content re-lock control system 100 in which embodiments of content re-lock control can be implemented. The content re-lock control system 100 includes a content rendering device 102 and one or more content providers 104 which control the distribution of such content as movies, programs, commercials, music, on-demand content, games, and similar audio, video, and/or image content, as well as restricted content 106(1). Restricted content 106(1) includes any of the aforementioned content that is locked or otherwise restricted from being rendered.

In a television-based entertainment and information system, such as an interactive television network, cable network, or Web-enabled television network, a content provider 104 can be implemented as a satellite, network television, or cable operator, a broadcast center, and/or a headend service that distributes content to subscriber sites and television-based client devices.

The content rendering device 102 can receive the restricted content 106(1) from content provider 104 via various transmission media 108, such as satellite transmission, radio frequency transmission, cable transmission, an IP-based network TCP/IP media, and/or via any number of other transmission media using any broadcast format or protocol. Additionally, transmission media 108 can be any type of network, using any type of network topology and any network communication protocol, and can be represented or otherwise implemented as a combination of two or more networks.

In a television-based entertainment and information system, content rendering device 102 can be implemented as a television-based client device in any number of embodiments, such as a set-top box, a digital video recorder (DVR) and playback system, and as any other type of client device that receives content, such as broadcast program content, on-demand program content, and/or program guide data via the various transmission media 108. Content rendering device 102 can also be implemented as a digital audio recorder and playback system (e.g., an MP3 player), and as any other type of device that may be implemented in an audio-based system.

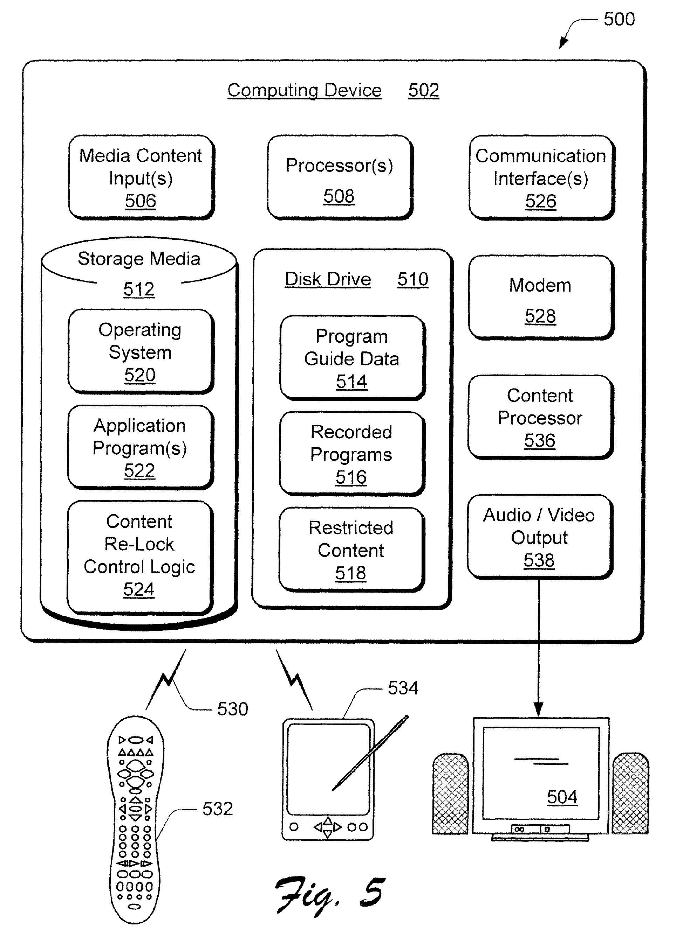

In this example, content rendering device 102 includes one or more content inputs 110, such as Internet Protocol (IP) inputs over which restricted content 106(1) is received via an IP-based network. The content rendering device 102 can also receive restricted content 106(2) from a remote storage device coupled to the content rendering device 102. Content rendering device 102 also includes a recording media 112 which can be implemented as any form of memory component, such as disk drive in a digital video recorder for example, to store restricted content 106(3). Restricted content 106(2) and 106(3) also includes any of the aforementioned content that is locked or otherwise restricted from being rendered. Although not shown, the content rendering device 102 can be implemented with any number and combination of differing components as described below with reference to computing device 502 shown in Fig. 5.

The content rendering device 102 includes content re-lock control logic 114(1) to implement content re-lock control. Alternatively, or in addition, a content provider 104 includes content re-lock control logic 114(2) to implement content re-lock control. The control logic 114 can be implemented as a software application that executes on a processor and can be stored as computer executable instructions in a non-volatile memory of the content rendering device 102, or of a content provider 104. Although content re-lock control logic 114 is illustrated and described as a single application, the control logic 114 can be implemented as several component applications distributed to each perform one or more functions in a digital video recorder system and/or in any other computing system.

Content rendering device 102 can receive user-selectable input commands 116 from an input device, such as from remote control device 118. Further, a user can interact with the content rendering device 102 to select a program channel to render a particular program, request a video on-demand movie, respond to a video-phone call, browse program channels, movie listings, the Web, and the like. A user can also interact with the content rendering device 102 to interface with a software application, an e-commerce application, network with others, participate in an on-line game, and any number of other different types of tasks that a user can manage via the content rendering device 102.

The content re-lock control logic 114 receives an input, such as a personal identification number or other input to unlock restricted content 106 and initiate rendering the restricted content 106 on display device 120 and/or through audio rendering devices 122. The restricted content 106 is rendered for a rendering duration that begins at a time {t=0} and ends when the restricted content, or portions thereof, has been rendered. For example, if restricted content 106 is a parentally controlled movie that has been unlocked for viewing, the movie can be displayed for a rendering duration of two hours, and can then be re-locked.

Recorded restricted content 106(3) can be rendered for viewing, but the duration over which the content is rendered can be altered, or time-shifted, with content navigation inputs, such as fast-forward, skip-ahead, rewind, skip-back, pause, and stop. When a rendering duration of restricted content is time-shifted, the restricted content may not be re-locked when expected, or may re-lock before the restricted content has been fully rendered. Accordingly, the control logic 114 determines an effective rendering duration of the restricted content 106 from a combination of the rendering duration and a time-shift duration when a user-selectable input 116 is received to time-shift the rendering duration of the restricted content 106. The control logic 114 also determines from the effective rendering duration when to re-lock the restricted content 106.

An effective rendering duration ($E$) with respect to a start of the initial rendering duration ($D$) at time $\{t=0\}$ can be determined from the rendering duration ($D$) plus a sum of content replay inputs ($R$) plus a sum of content suspend inputs ($S$) minus a sum of content advance inputs ($A$), which can be expressed as equation: $E = D + \text{sum}\{R\} + \text{sum}\{S\} - \text{sum}\{A\}$. For example, a two hour movie has a rendering duration ($D$) of two hours (i.e., one-hundred and twenty minutes) and is unlocked for viewing at 9:30 p.m. If the viewer fast-forwards through ten minutes of the movie (advance $A=$ ten minutes), pauses the movie for one minute (suspend $S=$ one minute), and then re-winds the movie for two minutes (replay $R=$ two minutes), the effective duration would be determined as:

$$E = 120 \text{ min} + 2 \text{ min} + 1 \text{ min} - 10 \text{ min} = 113 \text{ minutes}$$

Accordingly, the restricted content would be re-locked after being rendered for one-hundred and thirteen minutes after 9:30 p.m., or at 11:23 p.m. rather than 11:30 p.m. It should be appreciated that minutes is an implementation option, and that the durations can be expressed and implemented in hours, minutes, seconds, and/or in any combination thereof

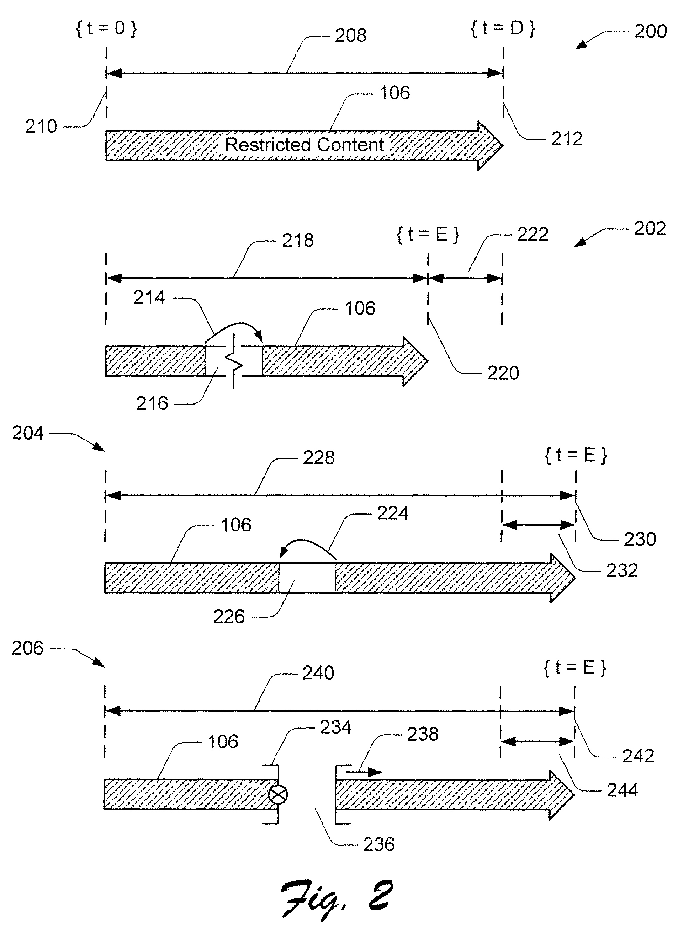

Fig. 2 illustrates an example 200 of rendering restricted content, as well as an example 202 of a time-shift that corresponds to a content advance input, an example 204 of a time-shift that corresponds to a content replay input, and an example 206 of a time-shift that corresponds to a content suspend input. In example 200, restricted content 106 is rendered for a rendering duration 208. The rendering duration 208 begins at a time $\{t=0\}$ 210 and ends at a time $\{t=D$ (duration)$\}$ 212 which coincides with when the restricted content has been fully rendered. For example, if restricted content 106 is a parentally controlled movie that has been unlocked for viewing, the movie can be displayed for a rendering duration 208 of two hours.

In the example time-shift 202, a content advance input 214, such as a fast-forward or skip-ahead command input, is received and a portion 216 of the restricted content 106 is advanced or passed over which effectively decreases the rendering duration 208 of the restricted content 106. An effective rendering duration 218 ends at a time $\{t=E$ (effective)$\}$ 220 which can be determined from the rendering duration 208 minus a time-shift duration 222 that corresponds to the content advance input 214. For example, if a viewer skips-ahead ten minutes in the movie that has been unlocked for viewing, the effective rendering duration 218 is equal to the rendering duration 208 minus the ten minutes of the movie that was skipped over.

In the example time-shift 204, a content replay input 224, such as a rewind or skip-back command input, is received and a portion 226 of the restricted content 106 is replayed which effectively increases the rendering duration 208 of the restricted content 106. An effective rendering duration 228 ends at a time $\{t=E$ (effective)$\}$ 230 which can be determined from the rendering duration 208 plus a time-shift duration 232 that corresponds to the content replay input 224. For example, if the viewer rewinds ten minutes of the movie that has been unlocked for viewing, the effective rendering duration 228 is equal to the rendering duration 208 plus the ten minutes of the movie that was rewound for viewing.

In the example time-shift 206, a content suspend input 234, such as a pause or stop command input, is received and the restricted content 106 is not being rendered for a time duration 236 which effectively increases the rendering duration 208 of the restricted content 106. Rendering of the restricted content 106 can be resumed with a resume or play input command 238. An effective rendering duration 240 ends at a time $\{t=E$ (effective)$\}$ 242 which can be determined from the rendering duration 208 plus a time-shift duration 244 that corresponds to the content suspend input 234. For example, if the viewer pauses the movie that has been unlocked for viewing for ten minutes, the effective rendering duration 240 is equal to the rendering duration 208 plus the ten minutes that the movie was paused.

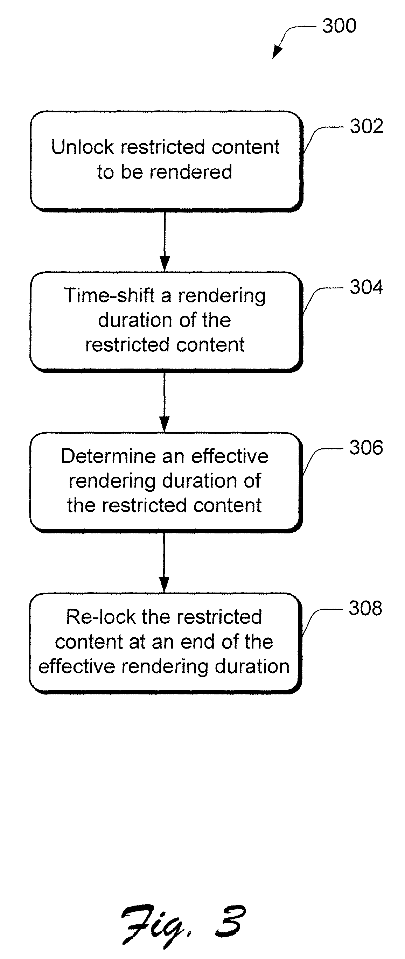

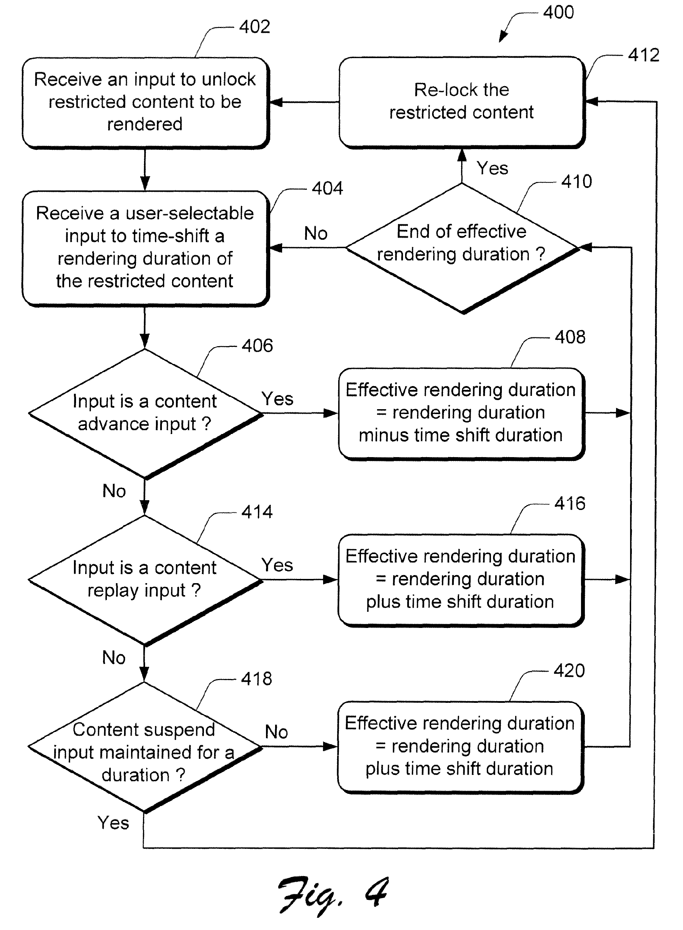

Methods for content re-lock control, such as exemplary methods 300 and 400 described with reference to Figs. 3 and 4 respectively, may be described in the general context of computer executable instructions. Generally, computer executable instructions include routines, programs, objects, components, data structures, procedures, modules, functions, and the like that perform particular functions or implement particular abstract data types. The methods may also be practiced in a distributed computing environment where functions are performed by remote processing devices that are linked through a communications network. In a distributed computing environment, computer executable instructions may be located in both local and remote computer storage media, including memory storage devices.

Fig. 3 illustrates an exemplary method 300 for content re-lock control and is described with reference to the exemplary content re-lock control system 100 shown in Fig. 1. The order in which the method is described is not intended to be construed as a limitation, and any number of the described method blocks can be combined in any order to implement the method. Furthermore, the method can be implemented in any suitable hardware, software, firmware, or combination thereof

At block 302, restricted content is unlocked to be rendered. For example, control logic 114 (Fig. 1) in a content rendering device 102 or content provider 104 can receive an input to unlock restricted content 106 such that the restricted content 106 can be rendered for a rendering duration 208 (Fig. 2). Examples of an input to unlock the restricted content 106 include a user personal identification number (PIN), or another type of input that initiates rendering the restricted content 106. The restricted content 106 can be rendered as video or images on display device 120, as audio through the audio rendering device 122, and/or as any combination thereof

At block 304, a rendering duration of the restricted content is time-shifted. For example, the control logic 114 can receive a user-selectable input 116 to time-shift the rendering duration 208 of the restricted content 106. The user-selectable input 116 may include a content advance input 214, a content replay input 224, or a content suspend input 234. Examples of a content advance input 214 include a fast-forward command and a skip-ahead command to advance rendering the restricted content 106. Examples of a content replay input 224 include a rewind command and a skip-back command to replay a portion of the restricted content 106. Examples of a content suspend input 234 include a pause command and a stop command to suspend rendering the restricted content 106.

At block 306, an effective rendering duration of the restricted content is determined. For example, control logic 114 determines an effective rendering duration from an equation described as: effective rendering duration = rendering duration 208 + sum{time-shift duration corresponding to one or more content replay inputs 224} + sum{time-shift duration corresponding to one or more content suspend inputs 234} - sum{ time-shift duration corresponding to one or more content advance inputs 214}.

At block 308, the restricted content is re-locked at an end of the effective rendering duration. For example, control logic 114 re-locks the restricted content 106 when an end of the effective rendering duration is reached which indicates that the restricted content 106, or portions thereof, has been rendered.

Fig. 4 illustrates an exemplary method 400 for content re-lock control and is described with reference to the exemplary content re-lock control system 100 shown in Fig. 1. The order in which the method is described is not intended to be construed as a limitation, and any number of the described method blocks can be combined in any order to implement the method. Furthermore, the method can be implemented in any suitable hardware, software, firmware, or combination thereof

At block 402, an input is received to unlock restricted content to be rendered. For example, control logic 114 (Fig. 1) in a content rendering device 102 or content provider 104 can receive an input to unlock restricted content 106 such that the restricted content 106 can be rendered for a rendering duration 208 (Fig. 2). Examples of an input to unlock the restricted content 106 include a user personal identification number (PIN), or another type of input that initiates rendering the restricted content 106. The restricted content 106 can be rendered as video or images on display device 120, as audio through the audio rendering device 122, and/or as any combination thereof.

At block 404, a user-selectable input is received to time-shift the rendering duration of the restricted content. For example, the control logic 114 can receive a user-selectable input 116 to time-shift the rendering duration 208 of the restricted content 106. The user-selectable input 116 may include a content advance input 214, a content replay input 224, or a content suspend input 234.

At block 406, a determination is made as to whether the received input is a content advance input. If the received input is a content advance input (i.e., "yes" from block 406), then an effective rendering duration for the restricted content is determined from the rendering duration minus the time-shift duration at block 408. For example, a content advance input 214 effectively decreases the rendering duration 208 for the restricted content 106 and control logic 114 determines the effective rendering duration 218 to be the rendering duration 208 minus a time-shift duration 222 that corresponds to the content advance input 214.

At block 410, a determination is made as to whether an end of the effective rendering duration has been reached. For example, control logic 114 determines whether rendering the restricted content 106 has been completed as indicated by reaching an end 220 of the effective rendering duration 218 (with reference to a start 210 of the rendering duration 208 and taking into account any time-shift durations). If an end of the effective rendering duration has been reached (i.e., "yes" from block 410), then the restricted content is re-locked at block 412 and the method continues at block 402. For example, control logic 114 re-locks the restricted content 106 after the restricted content 106 has been rendered according to the effective rendering duration 218. If an end of the effective rendering duration has not been reached (i.e., "no" from block 410), then the method continues at block 404 waiting to receive an additional user-selectable input to time-shift the rendering duration of the restricted content.

If the received input is not a content advance input (i.e., "no" from block 406), then, at block 414, a determination is made as to whether the received input is a content replay input. If the received input is a content replay input (i.e., "yes" from block 414), then an effective rendering duration for the restricted content is determined from the rendering duration plus the time-shift duration at block 416. For example, a content replay input 224 effectively increases the rendering duration 208 for the restricted content 106, and control logic 114 determines the effective rendering duration 228 to be the rendering duration 208 plus a time-shift duration 232 that corresponds to the content replay input 224. The method then continues at block 410 and/or block 412 as described above.

If the received input is not a content replay input (i.e., "no" from block 414), then, at block 418, a determination is made as to whether a content suspend input is maintained for a predetermined duration. This also indicates that if the received input is not a content advance input or a content replay input, then the received input is a content suspend input. If the content suspend input is maintained for the predetermined duration (i.e., "yes" from block 418), then the restricted content is re-locked at block 412. For example, if the control logic 114 receives a user-selectable input 116 to stop or pause rendering the restricted content 106, and the control logic 114 does not receive a resume or play command input to continue rendering the restricted content 106, the control logic 114 re-locks the restricted content 106 to prevent unauthorized rendering of the restricted content.

If the content suspend input is not maintained for the predetermined duration (i.e., "no" from block 418) (this indicates that a resume or play command is received before the predetermined duration to continue rendering the restricted content), then an effective rendering duration for the restricted content is determined from the rendering duration plus the time-shift duration at block 420. For example, a content suspend input 234 effectively increases the rendering duration 208 for the restricted content 106. Control logic 114 determines the effective rendering duration 240 to be the rendering duration 208 plus a time-shift duration 244 that corresponds to the content suspend input 234. The method then continues at block 410 and/or block 412 as described above.

Fig. 5 illustrates a television-based system 500 that includes an exemplary computing device 502 and a display device 504 on which restricted content that is unlocked for viewing can be displayed, or through which audio content can be rendered. Computing device 502 can be implemented in any number of embodiments with numerous other general purpose or special purpose computing system environments or configurations. Examples of well known computing systems, environments, and/or configurations that may be implemented in the television-based system 500 include, but are not limited to, personal computers, server computers, Web browsers, hand-held or laptop devices, multiprocessor systems, microprocessor-based systems, set-top boxes, programmable consumer electronics, network PCs, minicomputers, mainframe computers, a digital video recorder (DVR) and playback system, a digital audio recorder, gaming consoles, distributed computing environments that include any of the above systems or devices, and the like.

Computing device 502 includes one or more media content inputs 506 which may include Internet Protocol (IP) inputs over which streams of media content are received via an IP-based network. The media content inputs 506 may also include tuners that can be tuned to various frequencies or channels to receive television signals when computing device 502 is embodied as a set-top box or as a digital video recorder, for example. Computing device 502 also includes one or more processors 508 (e.g., any of microprocessors, controllers, and the like) which process various instructions to control the operation of computing device 502 and to communicate with other electronic and computing devices.

Computing device 502 can be implemented with a disk drive 510 and a storage media 512, examples of which include a random access memory (RAM) and a non-volatile memory (e.g., any one or more of a read-only memory (ROM), flash memory, EPROM, EEPROM, etc.). Disk drive 510 can include any type of magnetic or optical storage device, such as a hard disk drive, a recordable and/or rewriteable compact disc (CD), a DVD, a DVD+RW, and the like. The disk drive 510 provides a data storage mechanism to store various information and/or data such as received media content, program guide data 514, recorded programs 516, and recorded restricted content 518.

An operating system 520, application program(s) 522, and content re-lock control logic 524 can be maintained with storage media 512 and executed on processor(s) 508. Application programs 522 can include a program guide application that is implemented to process the program guide data 514 and generate program guides for display which enable a viewer to navigate through an onscreen display and locate broadcast programs, recorded programs, video on-demand programs and movies, interactive game selections, and other media access information or content of interest to the viewer.

Application programs 522 can also include a browser application and an email application. A browser application provides a user interface through which a user can interact with and browse the Web. An email application facilitates email communication and provides a user interface through which a user can interact with a mail service provider.

Computing device 502 further includes communication interface(s) 526 and a modem 528. The communication interface(s) 526 can be implemented as any one or more of a serial and/or parallel interface, a wireless interface, any type of network interface, and as any other type of communication interface. A wireless interface enables computing device 502 to receive control input commands 530 and other information from an input device, such as from remote control device 532 or from another infrared (IR), 802.11, Bluetooth, or similar RF input device. Input devices can include a wireless keyboard or another handheld input device 534 such as a personal digital assistant (PDA), handheld computer, wireless phone, and/or other mechanisms to interact with, and to input information to computing device 502. Modem 528 facilitates computing device 502 communication with other electronic and computing devices via a conventional telephone line, a DSL connection, cable, and/or other type of connection.

Computing device 502 also includes a content processor 536 which can include a video decoder and/or additional processors to receive, process, and decode media content and display data. Computing device 502 also includes an audio and/or video output 538 that provides audio and video to an audio rendering and/or display device 504, or to other devices that process, display, and/or otherwise render audio, video, and display data. Video signals and audio signals can be communicated from computing device 502 to television 504 via an RF (radio frequency) link, S-video link, composite video link, component video link, analog audio connection, or other similar communication links.

Although shown separately, some of the components of computing device 502 may be implemented in an application specific integrated circuit (ASIC). Additionally, a system bus (not shown) typically connects the various components within computing device 502. A system bus can be implemented as one or more of any of several types of bus structures, including a memory bus or memory controller, a peripheral bus, an accelerated graphics port, or a local bus using any of a variety of bus architectures.

Although embodiments of content re-lock control have been described in language specific to structural features and/or methods, it is to be understood that the subject of the appended claims is not necessarily limited to the specific features or methods described. Rather, the specific features and methods are disclosed as exemplary implementations of content re-lock control systems and methods.

## Claims

1.   A content re-lock control system, comprising:

> restricted content that is locked from being rendered;
> control logic configured to:
>
>> receive an input to unlock the restricted content such that the restricted content can be rendered for a rendering duration;
>> receive a user-selectable input that time-shifts the rendering duration of the restricted content; and
>> determine an effective rendering duration of the restricted content from the rendering duration and a time-shift duration.

2.   A content re-lock control system as recited in claim 1, wherein the control logic is further configured to determine when to re-lock the restricted content from the effective rendering duration.

3.   A content re-lock control system as recited in claim 1, wherein the control logic is further configured to re-lock the restricted content at a time that corresponds to an end of the effective rendering duration.

4.   A content re-lock control system as recited in claim 1, wherein the control logic is further configured to receive the input to unlock the restricted content as a personal identification number.

5.   A content re-lock control system as recited in claim 1, wherein the control logic is further configured to receive the input to unlock the restricted content as an input to start rendering the restricted content.

6.   A content re-lock control system as recited in claim 1, wherein the control logic is further configured to receive the user-selectable input as a content advance input that decreases the rendering duration of the restricted content.

7.   A content re-lock control system as recited in claim 1, wherein the control logic is further configured to receive the user-selectable input as a content advance input that decreases the rendering duration of the restricted content, and determine the effective rendering duration from the rendering duration minus the time-shift duration.

8.   A content re-lock control system as recited in claim 7, wherein the content advance input is a fast-forward command input.

9.   A content re-lock control system as recited in claim 7, wherein the content advance input is a skip-ahead command input.

10.  A content re-lock control system as recited in claim 1, wherein the control logic is further configured to receive the user-selectable input as a content replay input that increases the rendering duration of the restricted content.

11.  A content re-lock control system as recited in claim 1, wherein the control logic is further configured to receive the user-selectable input as a content replay input that increases the rendering duration of the restricted content, and determine the effective rendering duration from the rendering duration plus the time-shift duration.

12. A content re-lock control system as recited in claim 11, wherein the content replay input is a rewind command input.

13. A content re-lock control system as recited in claim 11, wherein the content replay input is a skip-back command input.

14. A content re-lock control system as recited in claim 1, wherein the control logic is further configured to receive the user-selectable input as a content suspend input that increases the rendering duration of the restricted content.

15. A content re-lock control system as recited in claim 1, wherein the control logic is further configured to receive the user-selectable input as a content suspend input that increases the rendering duration of the restricted content, and determine the effective rendering duration from the rendering duration plus the time-shift duration.

16. A content re-lock control system as recited in claim 15, wherein the content suspend input is a pause command input to pause rendering the restricted content.

17. A content re-lock control system as recited in claim 15, wherein the content suspend input is a stop command input to stop rendering the restricted content.

18. A content re-lock control system as recited in claim 1, wherein the control logic is further configured to:

   receive one or more additional user-selectable inputs that time-shift the rendering duration of the restricted content; and
   determine the effective rendering duration of the restricted content from the rendering duration minus a first time-shift duration corresponding to a content advance input plus a second time-shift duration corresponding to a content replay input plus a third time-shift duration corresponding to a content suspend input.

19. A content re-lock control system as recited in claim 1, wherein the control logic is further configured to determine the effective rendering duration of the restricted content from an equation:

$$\text{effective rendering duration} = \text{rendering duration} + \text{sum\{time-shift duration}$$
$$\text{corresponding to one or more content replay inputs\}} + \text{sum\{time-shift duration}$$
$$\text{corresponding to one or more content suspend inputs\}} - \text{sum\{ time-shift duration}$$
$$\text{corresponding to one or more content advance inputs\}}.$$

20. A content re-lock control system as recited in claim 1, wherein the control logic is further configured to receive the user-selectable input as a content suspend input, and re-lock the restricted content in an event that the content suspend input is maintained for a designated duration.

21. A content re-lock control system as recited in claim 20, wherein the content suspend input is a pause command input to pause rendering the restricted content.

22. A content re-lock control system as recited in claim 20, wherein the content suspend input is a stop command input to stop rendering the restricted content.

23. A content provider configured to provide the restricted content to a client device, the content provider comprising the content re-lock control system as recited in claim 1.

24. A client device configured to receive the restricted content from a content provider, the client device comprising the content re-lock control system as recited in claim 1.

25. A method, comprising:

receiving an input to unlock restricted content such that the restricted content can be rendered for a rendering duration;

receiving a user-selectable input that time-shifts the rendering duration of the restricted content; and

determining an effective rendering duration of the restricted content from the rendering duration and a time-shift duration that corresponds to the time-shift.

26. A method as recited in claim 25, further comprising determining when to re-lock the restricted content after determining the effective rendering duration.

27. A method as recited in claim 25, further comprising re-locking the restricted content at a time that corresponds to an end of the effective rendering duration.

28. A method as recited in claim 25, wherein receiving the input to unlock the restricted content includes receiving a personal identification number.

29. A method as recited in claim 25, wherein receiving the input to unlock the restricted content includes receiving an input to start rendering the restricted content.

30. A method as recited in claim 25, wherein receiving the user-selectable input includes receiving a content advance input that decreases the rendering duration of the restricted content.

31. A method as recited in claim 25, wherein:

receiving the user-selectable input includes receiving a content advance input that decreases the rendering duration of the restricted content; and

determining the effective rendering duration of the restricted content includes determining the effective rendering duration from the rendering duration minus the time-shift duration.

32. A method as recited in claim 31, wherein receiving the content advance input includes receiving a fast-forward command input.

33. A method as recited in claim 31, wherein receiving the content advance input includes receiving a skip-ahead command input.

34. A method as recited in claim 25, wherein receiving the user-selectable input includes receiving a content replay input that increases the rendering duration of the restricted content.

35. A method as recited in claim 25, wherein:

receiving the user-selectable input includes receiving a content replay input that increases the rendering duration of the restricted content; and

determining the effective rendering duration of the restricted content includes determining the effective rendering duration from the rendering duration plus the time-shift duration.

36. A method as recited in claim 35, wherein receiving the content replay input includes receiving a rewind command input.

37. A method as recited in claim 35, wherein receiving the content replay input includes receiving a skip-back command input.

38. A method as recited in claim 25, wherein receiving the user-selectable input includes receiving a content suspend input that increases the rendering duration of the restricted content.

39. A method as recited in claim 25, wherein:

receiving the user-selectable input includes receiving a content suspend input that increases the rendering duration of the restricted content; and

determining the effective rendering duration of the restricted content includes determining the effective rendering duration from the rendering duration plus the time-shift duration.

40. A method as recited in claim 39, wherein receiving the content suspend input includes receiving a pause command input to pause rendering the restricted content.

41. A method as recited in claim 39, wherein receiving the content suspend input includes receiving a stop command input to stop rendering the restricted content.

42. A method as recited in claim 25, further comprising receiving one or more additional user-selectable inputs that time-shift the rendering duration of the restricted content, and wherein determining the effective rendering duration of the restricted content includes determining the effective rendering duration from the rendering duration minus a first time-shift duration corresponding to a content advance input plus a second time-shift duration corresponding to a content replay input plus a third time-shift duration corresponding to a content suspend input.

43. A method as recited in claim 25, wherein determining the effective rendering duration of the restricted content includes determining the effective rendering duration from an equation:

$$\text{effective rendering duration} = \text{rendering duration} + \text{sum}\{\text{time-shift duration}$$
$$\text{corresponding to one or more content replay inputs}\} + \text{sum}\{\text{time-shift duration}$$
$$\text{corresponding to one or more content suspend inputs}\} - \text{sum}\{\text{time-shift duration}$$
$$\text{corresponding to one or more content advance inputs}\}.$$

44. A method as recited in claim 25, further comprising re-locking the restricted content in an event that the user-selectable input is received as a content suspend input that is maintained for a designated duration.

45. A method as recited in claim 44, wherein receiving the user-selectable input includes receiving the content suspend input as a pause command to pause rendering the restricted content.

46. A method as recited in claim 44, wherein receiving the user-selectable input includes receiving the content suspend input as a stop command to stop rendering the restricted content.

47. One or more computer readable media comprising computer executable instructions that, when executed, direct a content re-lock control system to:

process an input to unlock restricted content such that the restricted content can be rendered for a rendering duration;
process a user-selectable input that time-shifts the rendering duration of the restricted content; and
determine an effective rendering duration of the restricted content from the rendering duration and a time-shift duration that corresponds to the time-shift.

48. One or more computer readable media as recited in claim 47, further comprising computer executable instructions that, when executed, direct the content re-lock control system to determine when to re-lock the restricted content after the effective rendering duration is determined.

49. One or more computer readable media as recited in claim 47, further comprising computer executable instructions that, when executed, direct the content re-lock control system to re-lock the restricted content at a time that corresponds to an end of the effective rendering duration.

50. One or more computer readable media as recited in claim 47, further comprising computer executable instructions that, when executed, direct the content re-lock control system to process a personal identification number as the input to unlock the restricted content.

51. One or more computer readable media as recited in claim 47, further comprising computer executable instructions that, when executed, direct the content re-lock control system to process a content advance input as the user-selectable input to decrease the rendering duration of the restricted content, and determine the effective rendering duration of the restricted content from the rendering duration minus the time-shift duration.

52. One or more computer readable media as recited in claim 47, further comprising computer executable instructions that, when executed, direct the content re-lock control system to process a content replay input as the user-selectable input to increase the rendering duration of the restricted content, and determine the effective rendering duration of the restricted content from the rendering duration plus the time-shift duration.

53. One or more computer readable media as recited in claim 47, further comprising computer executable instructions that, when executed, direct the content re-lock control system to process a content suspend input as the user-selectable input to increase the rendering duration of the restricted content, and determine the effective rendering duration of the restricted content from the rendering duration plus the time-shift duration.

54. One or more computer readable media as recited in claim 47, further comprising computer executable instructions that, when executed, direct the content re-lock control system to process one or more additional user-selectable inputs that time-shift the rendering duration of the restricted content, and determine the effective rendering duration from the rendering duration minus a first time-shift duration corresponding to a content advance input plus a second time-shift duration corresponding to a content replay input plus a third time-shift duration corresponding to a content suspend input.

55. One or more computer readable media as recited in claim 47, further comprising computer executable instructions that, when executed, direct the content re-lock control system to determine the effective rendering duration of the restricted content from an equation:

$$\text{effective rendering duration} = \text{rendering duration} + \text{sum\{time-shift duration}$$
$$\text{corresponding to one or more content replay inputs\}} + \text{sum\{time-shift duration}$$
$$\text{corresponding to one or more content suspend inputs\}} - \text{sum\{ time-shift duration}$$
$$\text{corresponding to one or more content advance inputs\}.}$$

*Fig. 1*

{ t = 0 }    208    { t = D }    200

210    106    212

Restricted Content

218    { t = E }    222    202

214    106    220

216

204    228    { t = E }

106    224    230

226    232

206    240    { t = E }

106    234    238    242

236    244

*Fig. 2*

— 300

Unlock restricted content
to be rendered

— 302

Time-shift a rendering
duration of the
restricted content

— 304

Determine an effective
rendering duration of
the restricted content

— 306

Re-lock the restricted
content at an end of the
effective rendering duration

— 308

*Fig. 3*

*Fig. 4*

500

Computing Device     502

Media Content
Input(s)
506

Processor(s)
508

Communication
Interface(s)
526

Storage Media
512

Operating
System
520

Application
Program(s)
522

Content
Re-Lock
Control Logic
524

Disk Drive     510

Program
Guide Data
514

Recorded
Programs
516

Restricted
Content
518

Modem
528

Content
Processor
536

Audio / Video
Output
538

530

534

532

504

*Fig. 5*